Europäisches Patentamt

European Patent Office

Office européen des brevets

(19)

(11) Veröffentlichungsnummer: **0 402 962**
**A2**

(12) # EUROPÄISCHE PATENTANMELDUNG

(21) Anmeldenummer: **90115448.4**

(22) Anmeldetag: **12.08.85**

(51) Int. Cl.⁵: **G01D 5/26, G01K 11/20**

Diese Anmeldung is am 11 - 08 - 1990 als Teilanmeldung zu der unter INID-Kode 60 erwähnten Anmeldung eingereicht worden.

(30) Priorität: **31.08.84 DE 3431997**

(43) Veröffentlichungstag der Anmeldung:
**19.12.90 Patentblatt 90/51**

(60) Veröffentlichungsnummer der früheren Anmeldung nach Art. 76 EPÜ: **0 174 506**

(84) Benannte Vertragsstaaten:
**DE FR GB IT**

(71) Anmelder: **Firma Carl Zeiss**

**D-7920 Heidenheim (Brenz)(DE)**
(84) **DE FR IT**

Anmelder: **CARL-ZEISS-STIFTUNG trading as CARL ZEISS**

**D-7920 Heidenheim (Brenz)(DE)**
(84) **GB**

(72) Erfinder: **Franke, Karl-Heinz**
**Heckenweg 1**
**D-7923 Königsbronn(DE)**
Erfinder: **Legran, Peter**
**Bonifatiusstrasse 51**
**D-7080 Aalen(DE)**
Erfinder: **Reule, Alfred, Dr.**
**Kantstrasse 22**
**D-7080 Aalen(DE)**
Erfinder: **Schröder, Joachim**
**Albrecht-Erhardt-Strasse 17**
**D-7080 Aalen(DE)**

(54) **Faseroptischer Sensor mit einer fluoreszierenden Substanz.**

(57) Es handelt sich um einen faseroptischen Sensor mit einer fluoreszierenden Substanz, deren Fluoreszenz-Abklingdauer von einer physikalischen Größe, z.B. der Temperatur, abhängt, bei dem die Fluoreszenzstrahlung in einem Schwingungskreis auf die Anregungsschaltung rückgekoppelt wird und damit die Frequenz des Schwingungskreises ein Maß für die physikalische Größe ist. Entsprechend der Erfindung erfolgt die Rückkopplung des Fluoreszenzsignals über einen Oszillator (16a), dessen Steuersignal aus der Abklingdauer des Fluoreszenzsignales abgeleitet wird. Auf diese Weise werden erheblich bessere meßtechnische Eigenschaften erreicht als bei der bekannten Rückkopplung über ein Zeitglied.

Fig.1

## Faseroptischer Sensor mit einer fluoreszierenden Substanz

Die vorliegende Erfindung betrifft einen faseroptischer Sensor mit einer fluoreszierenden Substanz, deren Fluoreszenz-Abklingdauer von dem Wert einer physikalischen Größe abhängt, mit einem Detektor zum Empfang der Fluoreszenzstrahlung und zur Erzeugung eines zu dieser proportionalen elektronischen Signales.

Ein derartiger faseroptischer Sensor ist aus der DE-OS 32 02 089 für Temperaturmessungen bekannt. Bei ihm wird eine fluoreszierende Substanz von einem sinusförmig moduliertem Strahler angeregt und das aus dem zeitlich verzögerten Fluoreszenzlicht gewonnene Signal über ein Zeitglied auf die Steuerung des Modulators rückgekoppelt. Die sich in dem selbsterregenden Schwingungskreis einstellende Frequenz ist abhängig von der Fluoreszenz-Abklingdauer und damit von allen physikalischen Größen, die diese beeinflussen. Durch Verwendung einer Substanz, deren Fluoreszenz-Abklingdauer z.B. stark von der Temperatur abhängt, wird die zu messende Temperatur in die Modulationsfrequenz umgesetzt. Diese läßt sich leicht und genau über größere Strecken übertragen. Infolge der Zuführung der Anregungsstrahlung zum Meßort und der Abführung der Fluoreszenzstrahlung vom Meßort über einen (oder zwei) Lichtleitfaser(n) ist eine Anwendung auch in hoch- und niederfrequenten elektromagnetischen Wechselfeldern und auf hohen elektrischen Potentialen problemlos möglich.

Die aus der angegebenen DE-OS bekannte Rückkopplung über ein Zeitglied hat für sehr genaue Messungen folgende Nachteile:

a) Für eine gute Rauschunterdrückung wäre ein genau auf die Meßfrequenz abgestimmtes schmalbandiges Filter notwendig. Da sich bei einer Änderung der physikalischen Größe aber die Meßfrequenz ändert, kann ein fest abgestimmtes Filter nicht verwendet werden.

b) Die relative Frequenzänderung beträgt maximal die Hälfte der relativen Änderung der Fluoreszenz-Abklingdauer.

c) Da es völlig temperaturunabhängige elektrische Bauelemente nicht gibt, hängt die Frequenz auch von der Temperatur des Zeitgliedes ab, die deswegen genau konstant gehalten, künstlich kompensiert oder gemessen und bei der Umrechnung der gemessenen Frequenz in die physikalische Größe berücksichtigt werden muß.

d) Da in einem rückgekoppelten Schwingungskreis die Amplitude solange anwächst bis das weitere Anwachsen durch (meist nichtlineare) Verluste oder Frequenzänderungen begrenzt wird, ist ein störungsfreier Betrieb nur mit einer Amplitudenbegrenzung möglich, die aber die Frequenz nicht beeinflussen darf, was nur schwer zu realisieren ist

Der vorliegenden Erfindung liegt daher die Aufgabe zugrunde, einen faseroptischen Sensor mit einer fluoreszierenden Substanz zu schaffen, der sich durch geringes Rauschen, hohe Empfindlichkeit und große Genauigkeit auch über lange Zeiten und bei wechselnden Umgebungstemperaturen auszeichnet.

Die gestellte Aufgabe wird erfindungsgemäß gelöst durch einen Integrator, der durch Integration des elektronischen Signales ein Ausgangssignal erzeugt, und durch einen elektronischen Zeitgeber, welcher die Dauer der Integration des elektronischen Signales durch den Integrator so begrenzt, daß das Ausgangssignal eine Funktion der zu messenden physikalischen Größe ist.

Der Begriff Abklingdauer (decaytime bzw Fluoreszenz-Zeitkonstante) beschreibt sowohl das Fluoreszenzanklingverhalten als auch das Fluoreszenzabklingverhalten. Wenn die Auswertung des Fluoreszenzsignales in Analogtechnik erfolgt und ein spannungsgesteuerter Oszillator verwendet wird, dann kann bei der Gleichspannung für den Oszillator das Rauschen z.B. durch ein RC-Glied so stark unterdrückt werden, wie es das gewünschte Ansprechverhalten des Sensors zuläßt. Erfolgt die Auswertung des Fluoreszenzsignales in Digitaltechnik, dann kann durch entsprechende Mittelung der Werte das Rauschen im gleichen Maß unterdrückt werden.

Bei konstanter Amplitude der Anregungsstrahlung kann die Steuerung für den Oszillator direkt aus der Amplitude des Wechselspannungsanteiles des Fluoreszenzsignales gewonnen werden, da diese um so kleiner ist, je größer das Verhältnis der Fluoreszenz-Abklingdauer zur Periodendauer der Anregungsstrahlung ist. Damit ist die relative Änderung der Frequenz gleich der relativen Änderung der Fluoreszenz-Abklingdauer, wenn die Fluoreszenzintensität von der Temperatur unabhängig ist, wie das z.B. bei Lutetiumaluminiumchromborat der Fall ist.

In einer bevorzugten Ausführungsform sind für die Steuerung des Oszillators ein phasengesteuerter Gleichrichter, mit dem jeweils ein Teil des Fluoreszenzsignales ausgewertet wird, und ein Integrator, mit dem dieser Teil des Fluoreszenzsignales integriert wird, vorgesehen.

Wenn die Auswertung des Fluoreszenzsignales in Analogtechnik erfolgt, wird zweckmäßigerweise ein spannungsgesteuerter Oszillator verwendet und zwischen diesem und dem Integratorausgang ein Abtast- und Halteverstärker (sample and hold circuit) vorgesehen.

In einer besonders bevorzugten Ausführungsform erzeugt der Oszillator nicht die Modulationsfrequenz selbst, sondern ein Vielfaches davon. Sowohl das Signal für die Modulation als auch das dagegen im Takt versetzte Signal für die phasengesteuerte Gleichrichtung werden aus der Oszillatorfrequenz durch Untersetzung gewonnen. Da die Untersetzung ein reiner Zählvorgang ist, wird die relative zeitliche Lage des Signales für die phasengesteuerte Gleichrichtung zum Signal für die Modulation der Lichtquelle von der Temperatur elektronischer Bauelemente nicht beeinflußt.

In einer weiteren bevorzugten Ausführungsform nimmt die die Fluoreszenz anregende Strahlung in zeitlichem Wechsel mit der Modulationsfrequenz nur zwei feste Werte an (zeitlich rechteckförmige Modulation). Damit bleibt die Kennlinie des Strahlers ohne Einfluss und es ist keine besondere Amplitudenregelung notwendig.

Es ist vorteilhaft. als Tastverhältnis der Modulation für die Strahlungsquelle 1:1 zu wählen. Ebenso ist es vorteilhaft, als Tastverhältnis für den phasengesteuerten Gleichrichter 1:1 zu nehmen.

In einer besonders vorteilhaften Ausführungsform der Erfindung wird das im optischen Teil des Sensors auftretende Streulicht im elektronischen Teil durch einen (zusätzlichen) Regelkreis berücksichtigt, der das Fluoreszenzsignal auswertet und während der Hellphase der Strahlungsquelle einen Korrekturwert für das Fluoreszenzsignal erzeugt. Bei Ausführung in Analogtechnik wird dabei eine Korrekturspannung an den Verstärker für das Fluoreszenzsignal gegeben. Es ist zweckmäßig, für die Erzeugung des Korrekturwertes einen unsymmetrischen Gleichrichter und einen Integrator vorzusehen. Bei einer Ausführung in Analogtechnik sind außerdem ein Abtast- und Halteverstärker und ein elektronischer Schalter vorteilhaft.

Weitere Ausgestaltungen der Erfindung gehen aus den Unteransprüchen hervor.

· Die Erfindung wird im folgenden anhand eines in den Figuren 1 bis 5 dargestellten Ausführungsbeispiels in Analogtechnik näher erläutert. Dabei zeigen:

Fig. 1 ein Blockschaltbild für den gesamten Aufbau der Meßeinrichtung;

Fig. 2a-h Zeitdiagramme zur Veranschaulichung der Wirkungsweise des elektronischen Aufbaues;

Fig. 3e-h Zeitdiagramme zur Veranschaulichung der durch eine Änderung der Meßgröße verursachten Funktionsweise des elektronischen Aufbaues;

Fig. 4 ein Blockschaltbild für die elektronische Kompensation des Streulichtes und

Fig. 5b-h Zeitdiagramme zur Veranschaulichung der Funktionsweise der elektronischen Kompensation des Streulichtes.

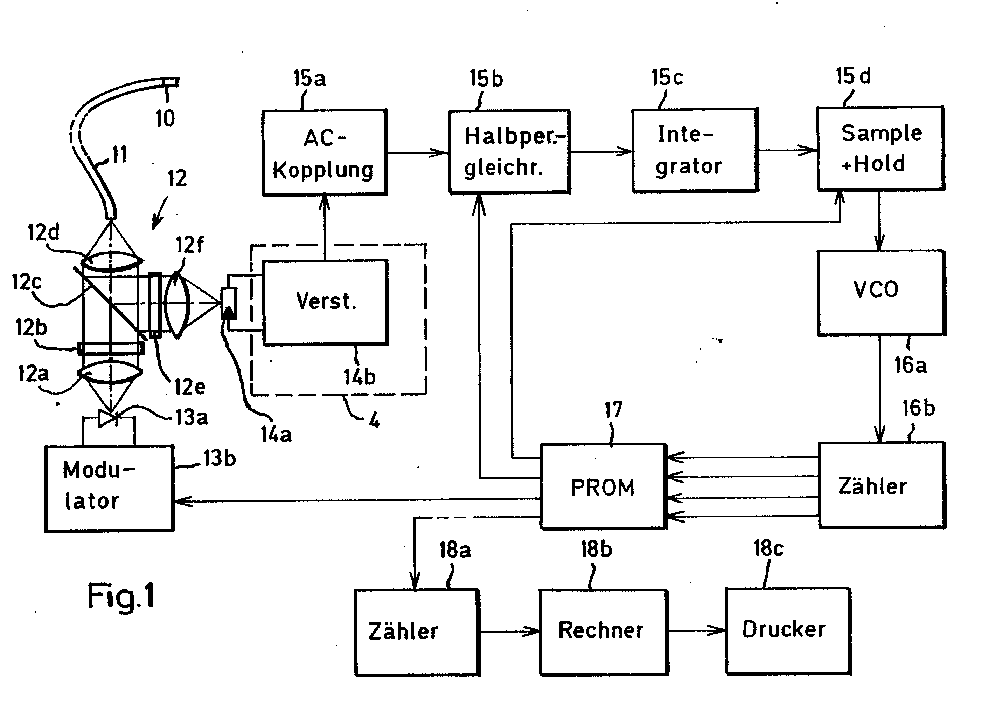

In Fig. 1 ist mit 10 eine fluoreszierende Substanz, z.B. ein Lutetiumaluminiumchromborat-Kristall, bezeichnet, der über die Lichtleitfaser 11 mit der optischen Einrichtung 12 verbunden ist. Letztere hat die Aufgabe, die von der Strahlungsquelle 13a, z.B. einer LED, ausgehende Anregungsstrahlung über die Sammellinsen 12a und 12d und durch den dichro itischen Spiegel 12c in die Lichtleitfaser 11 zu bringen, von der sie zu der fluoreszierenden Substanz 10 übertragen wird. Die dort entstehende Fluoreszenzstrahlung wird durch die Lichtleitfaser 11 zurück transportiert und von der optischen Einrichtung 12 über die Sammellinsen 12d und 12f und den dichroitischen Spiegel 12c auf den Empfänger 14a, z.B. eine Photodiode, gebracht. Das Filter 12b ist für den für die Fluoreszenzanregung notwendigen Wellenlängenbereich durchlässig und das Filter 12e ist im Wellenlängenbereich der Fluoreszenzstrahlung durchlässig. Ein derartiger Aufbau ist z.B. aus der DE-OS 32 02 089 bekannt; er wurde hier nur der Vollständigkeit halber beschrieben.

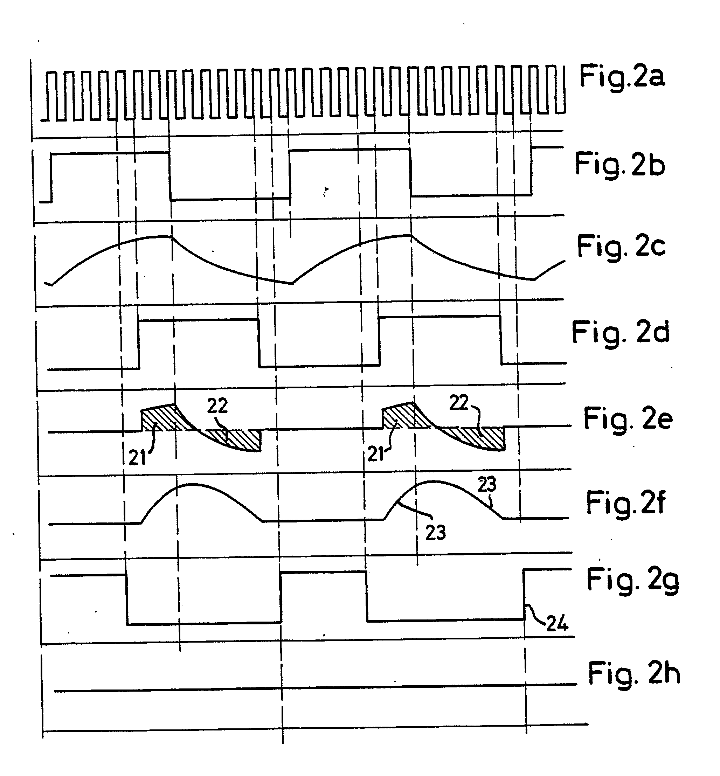

In dem im folgenden beschriebenen Ausführungsbeispiel der Erfindung wird die Strahlungs-. quelle 13a durch den Modulator 13b mit einer recheckförmigen Spannung versorgt. Diese ist in dem Zeitdiagramm der Figur 2b dargestellt. In einer vorteilhaften Ausgestaltung der Erfindung wird von dem spannungsgesteuerten Oszillator 16a nicht die Modulationsfrequenz der Strahlungsquelle, sondern ein Vielfaches, und zwar z.B. das 14-fache, davon erzeugt. Diese Ausgangsfrequenz des Oszillators 16a ist in Figur 2a dargestellt. In den Figuren 2 3 und 5 haben alle Zeitdiagramme die gleichen Zeitachsen. Die Ausgangsimpulse des Oszillators werden einem 4-Bit-Synchronzähler 16b zugeführt, dessen jeweiliger Zählerstand in Form einer TTL-Binärzahl von dem PROM 17 ausgewertet wird, welches sowohl die Modulationspulse für die Strahlungsquelle 13a als auch die im folgenden Text erwähnten Taktimpulse liefert.

Zur Umformung der Modulationspulse auf die in Figur 2b dargestellten Sollwertpegel für die Strahlungsquelle 13a enthält der Modulator 13b einen Operationsverstärker, durch dessen Verstärkung und Gleichspannungs-Addition die Spannungspegel für Hell- und Dunkelwert der Strahlungsquelle beliebig eingestellt werden können. Es ist zweckmäßig, das Tastverhältnis für die Modulation 1:1 zu wählen, wie in Figur 2b dargestellt.

Infolge der rechteckförmigen Modulation der Anregungsstrahlung ist die im Fluoreszenzkristall 10 erzeugte und vom Empfänger 14a detektierte Fluoreszenzstrahlung während der Hellphase eine zeitlich anklingende und während der Dunkelphase eine abklingende e-Funktion, wie im Zeitdiagramm der Figur 2c dargestellt.

Das geringe Fluoreszenzsignal wird im Verstärker 14b kräftig verstärkt und dann der aktiven AC-Kopplung 15a zugeführt. Dabei wird die Wechselspannung durch einen Operationsverstärker gebildet, der die Differenz zwischen der ankommenden Spannung und ihrem Gleichspannungsmittelwert bildet. Der Gleichspannungsmittelwert wird dadurch gewonnen, daß die Ausgangsspannung des Operationsverstärkers einem Integrator zugeführt wird. Da ein evtl. Offset des Integrators Fehler verursacht, ist es zweckmäßig, für den Integrator einen chopper-stabilisierten Operationsverstärker zu verwenden.

Der auf die AC-Kopplung 15a folgende phasengesteuerte Halbperiodengleichrichter wird so gesteuert, daß er den im Zeitdiagramm der Figur 2d dargestellten Durchlaßverlauf hat. Er kann z.B. durch eine Kombination von 2 MOSFET-Schaltern realisiert werden, welche von zwei zueinander inversen TTL-Signalen aus dem PROM 17 so angesteuert werden, daß während der halben Periodendauer das Signal über einen Serienschalter weitergeleitet wird und der folgende Kurzschlußschalter in dieser Zeit hochohmig ist. Während der anderen halben Periodendauer ist der Serienschalter geöffnet und der Kurzschlußschalter sorgt für exakt 0 Volt am Eingang des folgenden Integrators 15c. Der gesamte Spannungsverlauf am Eingang des Integrators 15c ist in dem Zeitdiagramm der Figur 2e dargestellt.

Der Integrator 15c ist zur Vermeidung von Offset-Fehlern ebenfalls chopper-stabilisiert; er ändert daher sein Ausgangssignal nicht während der Halbperioden, in denen der phasenabhängige Gleichrichter 15b geschlossen ist. Im eingeschwungenen Zustand sind die Flächen 21 und 22 im Zeitdiagrammm der Figur 2e gleich groß, daher geht die Ausgangsspannung am Integrator 15c, die in Figur 2f dargestellt ist, am Ende der Öffnungszeit des phasenabhängigen Gleichrichters wieder auf den gleichen Wert wie vor dieser Zeit. Während der nächsten Halbperiode erhält der Integrator 15c kein Signal und ändert infolge seiner Freiheit von Offset-Fehlern sein Ausgangssignal nicht. In dieser Zeit wird das Ausgangssignal an den Abtast- und Halteverstärker (sample and hold circuit) 15d über einen weiteren MOSFET-Schalter weitergegeben. Das hierfür vorgesehene und im Zeitdiagramm der Figur 2g dargestellte Taktsignal wird eben falls im PROM 17 aus der Frequenz des spannungsgesteuerten Oszillators 16a erzeugt.

Im Abtast- und Halteverstärker 15d wird das Ausgangssignal des Integrators 15c während der nächsten in Figur 2f mit 23 bezeichneten Integration gespeichert, so daß es als Steuerspannung für den spannungsgesteuerten Oszillator 16a zur Verfügung steht, bis ein neues Integrationsergebnis zum Zeitpunkt 24 vorliegt. Das Zeitdiagramm der Figur 2h zeigt die Steuerspannung für den spannungsgesteuerten Oszillator 16a im eingeschwungenen Zustand, d.h. bei konstanter Temperatur. In diesem Fall ist die Steuerspannung eine konstante Gleichspannung.

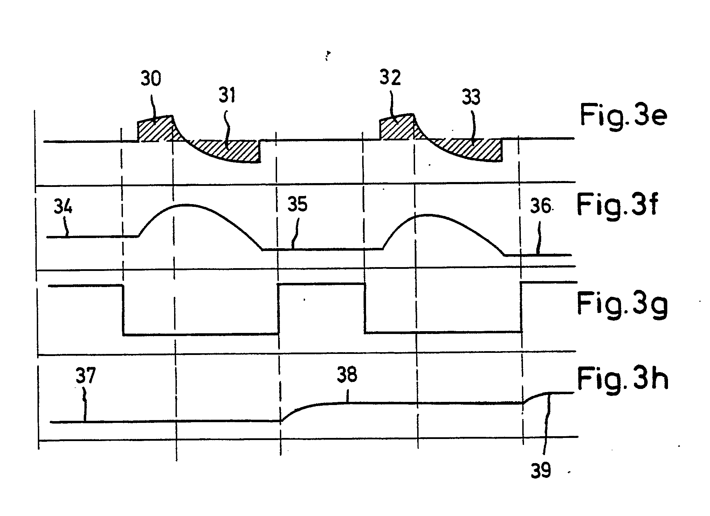

In der Figur 3 sind die Zeitdiagramme e bis h der Figur 2 für den Fall einer Temperaturänderung dargestellt, die zum Zweck einer möglichst einfachen Darstellung als Temperatursprung unmittelbar vor Beginn der Zeitdiagramme stattgefunden hat, Im Zeitdiagramm e der Figur 3 ist wieder der Spannungsverlauf am Eingang des Integrators 15c dargestellt. Infolge des Temperatursprunges hat sich die Fluoreszenz-Abklingdauer geändert und die mit 30 bezeichnete Fläche ist nicht so groß wie die mit 31 bezeichnete Fläche. Da die gesamte Meßanordnung eine Einstellzeit hat, ist auch die Fläche 32 noch nicht gleich groß wie die Fläche 33. Infolgedessen geht die Spannung am Ausgang des Integrators 15c - dargestellt im Zeitdiagramm der Figur 3f - nach Abschluß der Integration nicht wieder auf das Spannungsniveau 34, sondern auf ein tieferes Spannungsniveau 35 und nach der nächsten Integration auf das noch etwas tiefere Spannungsniveau 36. Dadurch geht die Steuerspannung für den spannungsgesteuerten Oszillator 16a - dargestellt im Zeitdiagramm der Figur 3h - vom Spannungsniveau 37 auf das Spannungsniveau 38 und später auf das Spannungsniveau 39. Infolgedessen ändert sich jedesmal die Frequenz des spannungsgesteuerten Oszillators bis das zeitliche Integral der gleichgerichteten Spannung Null ist, worauf die Steuerspannung des spannungsgesteuerten Oszillators gleich bleibt und der spannungsgesteuerte Oszillator 16a mit wieder konstanter Frequenz schwingt. Diese Frequenz ist ein Maß für die neue Temperatur.

Die konstante Frequenz im eingeschwungenen Zustand ist dadurch gekennzeichnet, daß die Periodendauer der Modulation der Anregungsstrahlung in einem bestimmten Verhältnis x zur Fluoreszenz-Abklingdauer steht. Das Verhältnis x hängt von der Phasenlage $\gamma$ der phasenabhängigen Gleichrichtung zur Modulation der Anregungsstrahlung sowie von dem Verhältnis W der unvermeidbaren Verstärkerzeitkonstanten zur Periodendauer der Modulation ab. Für W = 0 und $\gamma$ = 5/14 hat x den Wert 8,426.

Zur Messung der Frequenz des optisch-elektrischen Schwingkreises, dh. z.B. der Modulationsfrequenz der Strahlungsquelle 13a, ist das PROM 17 mit dem elektronischen Zähler 18a verbunden. Die Umrechnung der Frequenzwerte in die Meßwerte der fluoreszierenden Substanz 10 erfolgt z.B. durch den Rechner 18b und die Ausgabe der Meßwerte kann z.B. mit einem Drucker 18c, einem Schreiber oder einer Anzeige erfolgen. Bei Verwendung von Lutetiumaluminiumchromborat als fluoreszierende Substanz 10 liegt für einen Temperaturbereich von -30 bis +150 °C die Frequenz des optisch- elektrischen Schwingungskreises im Bereich von 220 bis 1200 Hz und dementsprechend die Frequenz des spannungsgesteuerten Oszillators 16a im Bereich von 3080 bis 16800 Hz.

In einer weiteren Ausführungsform der Erfindung wird das im optischen Teil des Sensors auftretende Streulicht elektrisch kompensiert. Dieses Streulicht entsteht dadurch, daß die Strahlungsquelle 13a auch Strahlung im Wellenlängenbereich des Fluoreszenzlichtes emittiert, diese zu einem geringen Teil durch das Filter 12b durchgelassen und an verschiedenen Grenzflächen der optischen Teile reflektiert wird, so daß sie ebenfalls auf den Empfänger 14a fällt. Außerdem wird auch Anregungsstrahlung an den Grenzflächen der optischen Teile reflektiert und zu einem geringen Teil durch das Filter 12e durchgelassen. Auch die Volumenstreuung der optischen Teile spielt eine Rolle. Insgesamt entsteht so ein zwar geringes Streulicht, das aber bei sehr hohen Anforderungen an die Meßgenauigkeit des Sensors nicht unberücksichtigt bleiben kann.

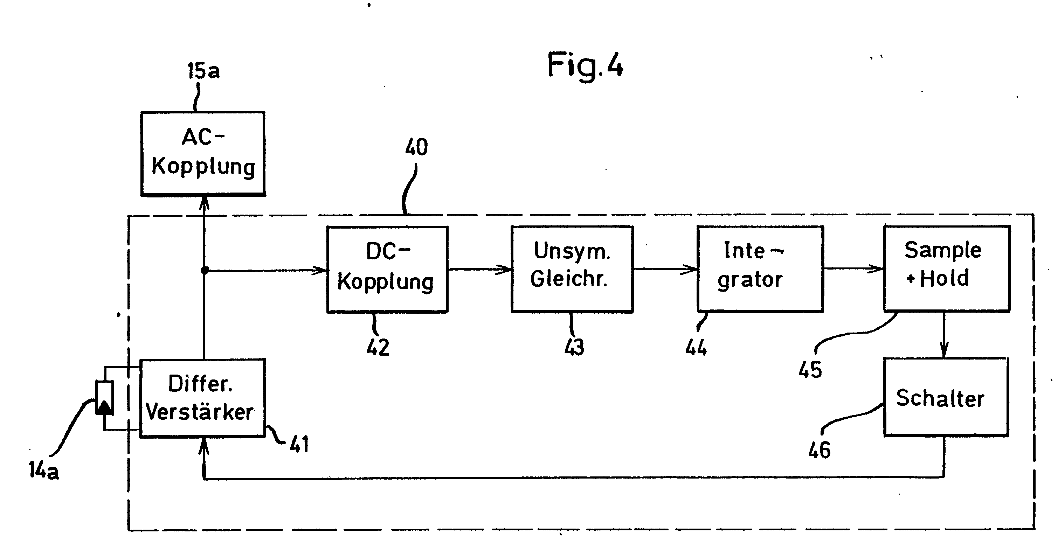

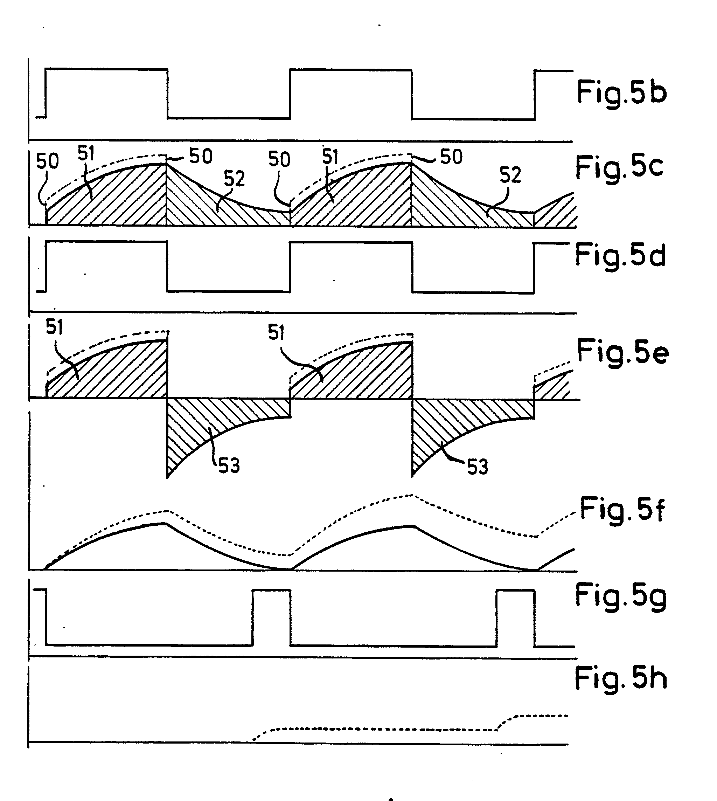

Der Einfluß des Streulichtes wird in einem (zusätzlichen) Regelkreis berücksichtigt, der den Schaltungsteil 4 von Figur 1 ersetzt, in Figur 4 mit 40 bezeichnet ist und dessen Funktionsweise durch die Zeitdiagramme der Figur 5 veranschaulicht wird.

In Figur 4 ist der Verstärker 14b aus Fig 1 durch den Differenzver stärker 41 ersetzt. Das von ihm erzeugte Signal entspricht, wenn kein Streulicht vorliegt, dem normalen Fluoreszenzsignal von Figur 2c. Es ist in Figur 5c ausgezogen dargestellt. Die Figur 5b zeigt das Modulationssignal für die Strahlungsquelle 13a. Während der Hellphasen der Strahlungsquelle entsteht ein geringer Anteil von Streulicht, welches das Fluoreszenzsignal in dieser Zeit so ändert, wie es in Figur 5c durch den punktierten Verlauf dargestellt ist. Der Einfluß ist dabei zur Verdeutlichung stark übertrieben; er liegt, wenn die Filter 12b und 12f gute Eigenschaften haben, in der Größenordnung von 1%.

Die am Anfang und Ende der Hellphasen in Figur 5 mit 50 bezeichneten Sprünge des Fluoreszenzsignales sind also auf Streulicht zurückzuführen. Sie können direkt für eine Kompensation des Streulichtes verwendet werden, indem durch einen Regelkreis während der Hellphasen eine Korrekturspannung an den Differenzverstärker 41 gegeben wird, die so groß ist, daß keine Sprünge auftreten. Eine besonders gute Berücksichtigung des Streulichtes erhält man durch den im folgenden beschriebenen Aufbau des Regelkreises 40.

Hierbei werden nicht die Sprünge 50 sondern das Verhältnis der Flächen 51 und 52 benutzt. Das Verhältnis dieser Flächen hat nämlich ohne Streulichteinfluß - infolge der Tatsache, daß das Fluoreszenzan- und abklingverhalten nach e-Funktionen mit der gleichen Zeitkonstante erfolgt - einen bestimmten theoretisch ausrechenbaren Wert, welcher im eingeschwungenen Zustand (des Regelkreises der Figur 1) lediglich von der Phasenlage der phasenabhängigen Gleichrichtung 15b (Figur 2d) abhängt. Für den weiter oben angesetzten Werte $\gamma = 5/14$ ist das Verhältnis der Flächen 51 und 52 = 3,35. Tritt nun Streulicht auf, so wird die Fläche 51 größer, während die Fläche 52 unverändert bleibt. Dadurch ändert sich das Verhältnis der beiden Flächen und die Abweichung ist ein Maß für die Größe des Streulichtes.

Die automatische elektrische Kompensation des Streulichtes erfolgt auf folgende Art: Das Ausgangssignal des Differenzverstärkers 41 wird zusätzlich einem zweiten Gleichrichter 43 zugeführt, dessen in Figur 5d dargestellte Steuerung mit der Modulation der Strahlungsquelle (Fig. 5b) in Phase ist. Da - wegen des erläuterten theoretischen Zusammenhanges - das vollständige Fluoreszenzsignal benutzt werden muß, ist eine Gleichspannungskopplung 42 notwendig. Zugleich mit der phasenabhängigen Gleichrichtung 43 wird die Verstärkung in der zweiten Halbperiode entsprechend den obigen Angaben um den Faktor 3,35 geändert. Am Ausgang dieses unsymmetrischen phasengesteuerten Gleichrichters 43 sind daher die Flächen 51 und 53 gleich groß, wenn kein Streulicht vorliegt.

Die Ausgangsspannung des Gleichrichters 43 wird dem Integrator 44 zugeführt, dessen Ausgangsspannung in Figur 5f dargestellt ist. Für Streulichtfreiheit gilt der ausgezogene Verlauf, bei dem am Ende der zweiten Halbperiode wegen der Gleichheit der Flächen 51 und 53 die Ausgangsspannung Null ist. Bei Anwesenheit von Streulicht gilt der punktierte Verlauf, in diesem Fall ist am Ende der zweiten Halbperiode eine Ausgangsspannung vorhanden. Diese wird von dem Abtast- und Halteverstärker 45 übernommen, dessen in Figur 5g dargestelltes Taktsignal ebenfalls im PROM 17 aus der Frequenz des spannungsgesteuerten Oszilators 16a erzeugt wird. Die Figur 5h zeigt die Ausgangsspannung des Abtast- und Halteverstärker 45, welche durch den elektronischen Schalter 46 nur während der ersten Halbperiode als Kompensationsspannung an den Differenzverstärker 41 weitergegeben wird.

Wenn kein Streulicht vorhanden ist, erhält der Differenzverstärker 41 keine Kompensationsspannung. Sobald Streulicht auftritt, ändert sich die Kompensationsspannung bis die Flächen 51 und 53 wieder gleich sind. Die schraffiert gezeichneten Flächen gelten also sowohl für Streulichtfreiheit als auch für elektrisch kompensiertes Streulicht, wobei im letzteren Fall eine Kompensationsspannung vorhanden ist, die geändert wird, wenn sich das Streulicht ändert.

Es ist selbstverständlich, daß infolge der Gleichstromkopplung hohe Anforderungen an die Freiheit von Offset-Driften bei den Verstärkern gestellt werden und auf eine genaue Einhaltung des Verstärkungsfaktors für die zweite Halbperiode, bzw. des Verstärkungsverhältnisses für die beiden Halbperioden geachtet werden muß.

Änderungen des Streulichtes erfolgen naturgemäß sehr langsam. Zweckmäsigerweise wird daher die elektrische Streulichtkompensation mit einer großen Zeitkonstanten ausgelegt, wodurch eine wechselseitige Beeinflussung dieser Regelung mit der Frequenzregelung vermieden wird.

Es ist möglich, am Ausgang des Verstärkers 14b einen Analog-digital-Wandler vorzusehen, und die weiteren Verarbeitungsschritte digital auszuführen. In diesem Fall wird zweckmäßigerweise ein digital gesteuerter Oszillator verwendet. Das kann so erfolgen, daß der Oszillator mit einer festen Frequenz betrieben wird, die so hoch ist. daß die Anregungsfrequenz aus ihr durch Unterteilung mit genügender Auflösung gewonnen werden kann. Bei einer Anregungsfrequenz von ca. 1 kHz ist dafür eine Frequenz von 50 MHz ausreichend.

**Ansprüche**

1. Faseroptischer Sensor mit einer fluoreszierenden Substanz (10), deren Fluoreszenz-Abklingdauer von dem Wert einer physikalischen Größe abhängt, mit einem Detektor (14a) zum Empfang der Fluoreszenzstrahlung und zur Erzeugung eines zu dieser proportionalen elektronischen Signales, gekennzeichnet durch einen Integrator (15c), der durch Integration des elektronischen Signales ein Ausgangssignal erzeugt, und durch einen elektronischen Zeitgeber (15b, 16a, 16b, 17), welcher die Dauer der Integration des elektronischen Signales durch den Integrator (15c) so begrenzt, daß das Ausgangssignal eine Funktion der zu messenden physikalischen Größe ist.

2. Faseroptischer Sensor nach Anspruch 1, dadurch gekennzeichnet, daß das elektronische Signal, z.B. durch eine AC-Kopplung (15a), so modifiziert wird, daß positive und negative Signale auftreten, und daß die durch den Integrator (15c) gebildeten Integrale (21, 22) der positiven und negativen Signale gleich sind, wenn der Wert der physikalischen Größe sich nicht ändert.

3. Faseroptischer Sensor mit einer fluoreszierenden Substanz (10), deren Fluoreszenz-Abklingdauer von dem Wert. einer physikalischen Größe abhängt, mit einem Detektor (14a) zum Empfang der Fluoreszenzstrahlung und zur Erzeugung eines zu dieser proportionalen elektronischen Signales, sowie mit einem Oszillator (16a), dessen Frequenz eine Funktion der physikalischen Größe ist als Reaktion auf das elektronische Signal, dadurch gekennzeichnet, daß ein phasenabhängiger Gleichrichter (15b) und ein Integrator (15c) an den Detektor (14a) angeschlossen sind, um das elektronische Signal zu verarbeiten und die Frequenz des Oszillators (16a) zu regeln.

4. Fraseroptischer Sensor nach Anspruch 3, dadurch gekennzeichnet, daß die Integrale (21, 22) der vom phasenabhängigen Gleichrichter (15b) gelieferten positiven und negativen Signale gleich sind, wenn der Wert der physikalischen Größe sich nicht ändert.

Fig.1

Fig. 2a

Fig. 2b

Fig. 2c

Fig. 2d

Fig. 2e

Fig. 2f

Fig. 2g

Fig. 2h

Fig.3e

Fig.3f

Fig.3g

Fig.3h

Fig.4

Fig.5b

Fig.5c

Fig.5d

Fig.5e

Fig.5f

Fig.5g

Fig.5h